# EUROPEAN PATENT SPECIFICATION

(11) **EP 2 464 025 B1**
(45) Date of publication and mention of the grant of the patent: **07.03.2018**
(21) Application number: 10788979.2
(22) Date of filing: 25.06.2010
(51) Int. Cl.: H04J 11/00, H04B 1/7075

(54) **METHOD AND APPARATUS FOR SETTING CENTER OF SEARCHING WINDOW**
VERFAHREN UND VORRICHTUNG ZUR EINSTELLUNG DER MITTE EINES SUCHFENSTERS
PROCÉDÉ ET APPAREIL DE DÉFINITION DU CENTRE D UNE FENÊTRE DE RECHERCHE

(30) Priority: 29.09.2009 CN 200910176385
(43) Date of publication of application: 13.06.2012
(73) Proprietor: ZTE Corporation, Shenzhen, Guangdong 518057 (CN)
(72) Inventor: LI, He, Shenzhen Guangdong 518057 (CN)
(74) Representative: Petraz, Gilberto Luigi
(86) International application number: PCT/CN2010/074503
(87) International publication number: WO 2010/145583

(56) References cited:
- WO-A1-01/50798
- WO-A1-2004/107609
- CN-A- 1 421 071
- CN-A- 101 415 240
- CN-A- 101 662 308
- US-A1- 2004 095 957
- US-A1- 2009 125 630

## Description

### Technical Field

The present invention relates to a wireless communication system, and particularly, to a method and apparatus for setting the center of a search window.

### Background of the Related Art

The so-called center of a search window is a starting search position of the channel board chip, and the chip takes the starting search position as a center and a certain distance as a radius to search signals around the center. The center of the search window with a sliding search window mode can be automatically adjusted by the chip, and the center of the search window with a fixed search window mode cannot be automatically adjusted by the chip. The so-called sliding search window mode and fixed search window mode are one classification for setting modes.

WO 01/50798 A1 (NORTEL NETWORKS LTD [CA]) 12 July 2001 (2001-07-12) discloses that, to solve the problem of searching for access attempts in large cells, a plurality of cell site modems may be configured to look for access attempts generated in respective circular or annular shaped areas centred at the centre of the base station's cell, the areas collectively covering the cell area.

US 2009/125630 A1 (GOGIC ALEKSANDAR M [US]) 14 May 2009 (2009-05-14) discloses an access terminal defines a search window based on a distance between access points, and in some aspects the definition of the search window may involve adjusting (e.g., advancing) a center of a search window based on the distance between the access points.

At present, most of the wireless communication systems take the voice service as major, but with the development of the trunking service and the proposal of a concept of network normalization, the trunking service also needs to be developed based on the existing network. The two different services of the voice service and trunking service will be more and more co-exist in the same wireless communication system. However, the two different services of the voice service and trunking service are very different in the problem of setting the center of the search window in the wireless communication system. For example: for the voice service, the traffic channel of each user is independent, the channel board chip in the base station side adopts the sliding search window mode, the chip automatically adjusts the center of the search window of each traffic channel, and real-time adjusts the center of the search window of the traffic channel according to the user location, so as to quickly demodulate the signals; and for the trunking service, all the trunking users in one group share a group of traffic channels, the locations of the users within the group are different from each other, thus it cannot be the same with the voice service in which the center of the search window of the traffic channel is set according to the user location, the center of the search window of the traffic channels must be fixed, but the fixed search window mode means that the chip is not allowed to automatically adjust the center of the search window.

Thus, when the voice service and the trunking service co-exist in the same wireless communication system, how to set the center of the search window has become a problem needed to be solved urgently.

In order to solve the problem of setting the center of the search window in the voice service and the trunking service, the center of the search window of the channel board chip is set as the fixed search window mode, which meets the requirements that the trunking service such as Push-To-Talk (PTT) service should fix the center of the search window, and for the voice service, the center of the search window of the chip is set according to the distance between the mobile station and the base station (hereinafter referred to as EPN) that is reported by the chip. However, although this solution can make the trunking service compatible with the voice service, there are still some problems in terms of the voice service: since the EPN is reported by the chip, when a user is in switching or the mobile station signal received by the base station in reverse is too weak, it will cause that the base station unlocks in reverse, that is, the base station cannot search the mobile station signal in reverse, and then the EPN reported by the chip at this time might be exceptional. Therefore, if the validity of the EPN is not determined, and the center of the search window of the chip is set only according to the EPN, then the exceptional EPN might be continually set into the chip, so that the center of the search window has errors and is further away from the true value, which causes that the signal cannot be searched in reverse, thereby dropped call phenomenon appears.

### Content of the Invention

In view of that, the main purpose of the present invention is to provide a method and an apparatus for setting center of a search window, so as to make a wireless communication system realize compatibility of the voice service and trunking service and to meet the requirement that the center of the search window of the voice service needs to change in real time.

To achieve the above purpose, the present invention discloses a method for setting center of a search window, comprising: a chip powering on, and setting a search window mode as a fixed search window mode; when a voice service starts, acquiring a center setting parameter, and when a chip reports a location information of a mobile station, that is, a distance between the mobile station and a base station (EPN), setting a center of a search window according to the center setting parameter and the location information of the mobile station; and before the voice service is over, continuing to acquire the center setting parameter, and resetting the center of the search window according to the subsequently acquired center setting parameter and the location information of the mobile station until the voice service is released;
wherein the center setting parameter comprises the number of continuous good frames.

When the center setting parameter is the number of continuous good frames, after the chip powers on, the number of continuous good frames on a reverse traffic channel is initialized.

Wherein, the acquiring the center setting parameter comprises: judging whether a frame is a good frame according to a frame rate reported by the chip, if the frame is determined as a good frame, adding 1 to the number N of continuous good frames which are continuously received; and if the frame is determined as a bad frame, clearing the number N of the continuous good frames which are continuously received.

In the aforementioned method, the setting the center of the search window according to the acquired center setting parameter and the location information of the mobile station comprises: judging whether the number of continuous good frames is greater than or equal to a threshold value of the number of continuous good frames, if the number of continuous good frames is greater than or equal to the threshold value of the number of continuous good frames, setting the center of the search window according to the EPN reported by the chip; and if the number of continuous good frames is less than the threshold value of the number of continuous good frames, not resetting the center of the search window.

Wherein, the resetting the center of the search window according to the subsequently acquired center setting parameter and the location information of the mobile station further comprises: after setting the center of the search window every time, judging whether the current voice service is over, if the voice service is not over, returning to continuously compute the number of continuous good frames sent by the mobile station in reverse; and if the voice service is over, stopping setting the center of the search window at the time.

Accordingly, the present invention provides an apparatus for setting center of a search window, comprising: a mode setting module, an initialization module, an acquiring module, an EPN monitoring module and a center setting module; wherein, the mode setting module is configured to set a search window mode; the initialization module is configured to initialize the number of continuous good frames on a reverse traffic channel; the acquiring module is configured to acquire a center setting parameter, wherein, preferably, the center setting parameter comprises the number of continuous good frames; the EPN monitoring module is configured to monitor a location information of a mobile station (EPN) reported by a chip; and the center setting module is configured to set a center of a search window according to the center setting parameter and the location information of the mobile station.

The aforementioned apparatus further comprises: a service judgment module, configured to judge whether a voice service is over, and notify a statistic module when the voice service is not over; the acquiring module is configured to compute the number of continuous good frames sent by the mobile station in reverse, and the apparatus further comprises: a frame rate judgment unit and a frame accumulation unit; wherein, the frame rate judgment unit is configured to judge whether a frame is a bad frame according to a frame rate; the frame accumulation unit is configured to accumulate the number of continuous good frames according to a judgment result of the frame rate judgment unit. The center setting module comprises: a threshold judgment unit and a center setting unit; wherein, the threshold judgment unit is configured to judge whether the number of continuous good frames is greater than or equal to a threshold value of the number of continuous good frames, and notify the center setting unit when the number of continuous good frames is greater than or equal to the threshold value of the number of continuous good frames; the center setting unit is configured to set the center of the search window according to the EPN reported by the chip and monitored by the EPN monitoring module.

From the above technical solution, it can be seen that, by setting the center of the search window of the chip as the fixed search window mode, the present invention makes the chip cannot automatically adjust the center of the search window. One method provided in the present invention is setting the EPN according to the good or bad frame rate in reverse, that is, when the number of continuous good frames N is greater than or equal to the threshold value M of the number of continuous good frames, the center of the search window is set according to the EPN reported by the chip. This meets the requirement of the trunking service on fixing the center of the search window. Besides, deciding whether to change the center of the search window according to the good or bad frame rate of the user's reverse link can also meet the requirement that the center of the search window of the voice service needs to change in real time; and moreover, the method for judging whether to set the center of the search window by the frame rate is simple and feasible.

Therefore, with the present invention, the wireless communication systems are able to realize that the voice service is compatible with the trunking service.

### Brief Description of Drawings

FIG. 1 is a flow chart of an implementation of a first embodiment of a method for setting the center of a search window in accordance with the present invention;
FIG. 2 is a flow chart of an implementation of a second embodiment of a method for setting the center of a search window that is not in accordance with the present invention;
FIG. 3 is a structure diagram of a first embodiment of an apparatus for setting the center of a search window in accordance with the present invention; and
FIG. 4 is a structure diagram of a second embodiment of an apparatus for setting the center of a search window that is not in accordance with the present invention.

### Preferred Embodiments of the Present Invention

The basic idea of the present invention is: setting the center of a search window of the chip as a fixed search window mode, so as to realize the fixed center of the search window of the trunking service; and meanwhile, setting the center of the search window of the chip according to good or bad frame rate of a user's reverse link, to meet the requirement of the voice service setting the center of the search window in real time.

In general, the technical solution adopted in the present invention comprises:
when the chip powers on, and setting the search window mode as the fixed search window mode;
when the voice service starts, acquiring a center setting parameter, and when the chip reports a location information of a mobile station, that is, a distance between the mobile station and the base station (EPN), setting the center of the search window according to the center setting parameter; and before the voice service is over, continually acquiring the center setting parameter, and resetting the center of the search window according to the subsequently acquired center setting parameter until the voice service is released.

It should be emphasized that the center setting parameter is the number of continuous good frames.

In order to make the above purposes, features and advantages of the present invention more clearly understand, the present invention will be further described in detail in combination with the accompanying drawings and the specific embodiments.

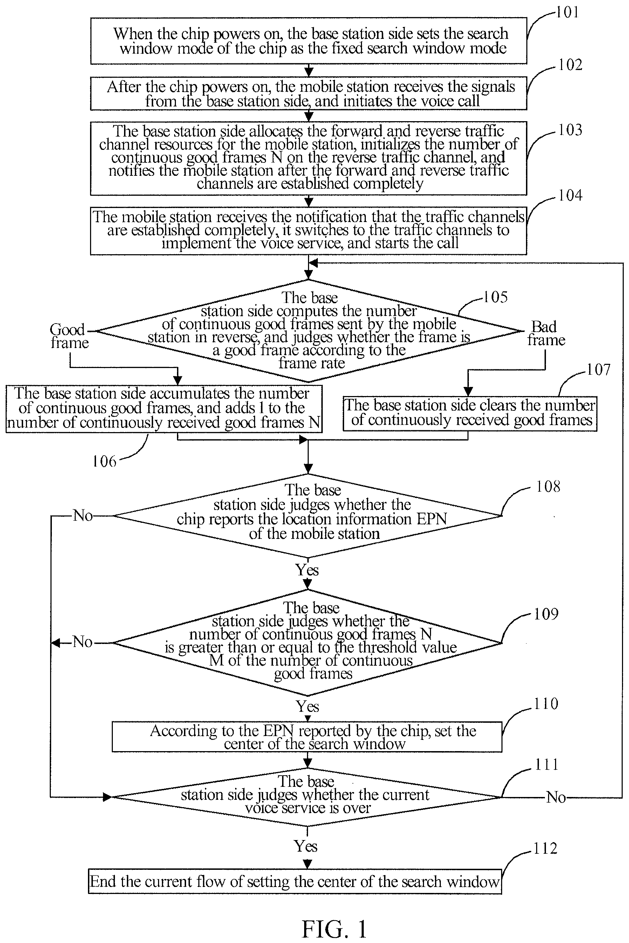

With reference to FIG. 1, it shows a flow of an implementation of the first embodiment of a method for setting the center of a search window in accordance with the present invention, and the main steps are as follows:
step 101, when the chip powers on, the base station side sets the search window mode of the chip as the fixed search window mode;
   wherein, when the chip powers on, the apparatus for setting the center of the search window at the base station side sets the search window mode of the chip as the fixed search window mode, so that the chip cannot automatically adjust the center of the search window, which meets the requirement of the trunking service on fixing the center of the search window. Therefore, the center of the search window can be set according to the center setting parameter such as the way of the good or bad frame rate of the reverse link, and so on, thus achieving the purpose of the voice service setting the center of the search window in real time.
Step 102, after the chip powers on, the mobile station receives a signal from the base station side, and initiates a voice call;
step 103, the base station side allocates the forward and reverse traffic channel resources for the mobile station, initializes the number of continuous good frames N on the reverse traffic channel, and notifies the mobile station after the forward and reverse traffic channels are established completely;
   after the base station side receives a call message sent from the mobile terminal, it judges whether there are available traffic channel resources, and when there are the available traffic channel resources, allocates radio resources such as the forward and reverse traffic channel resources for the mobile station, and notifies the mobile station after the forward and reverse traffic channels are established completely. Wherein, the process of allocating and establishing the forward and reverse traffic channel resources for the mobile station also comprises initializing the number of continuous good frames on the reverse traffic channel, wherein, the number of continuous good frames is the number of continuous good frames continuously received on the reverse traffic channel, and the number of continuous good frames is set to N. The number of continuous good frames N is initialized after initiating a call every time, herein, initializing the number of the continuous good frames is to set N=0.
Step 104, the mobile station receives the notification that the traffic channels are established completely, switches to the traffic channels to implement the voice service, and starts the call;
   wherein, the mobile station receives the notification that the base station side finishes to establish the traffic channels, and switches to the traffic channels to implement the voice service and starts the call.
Step 105, the base station side computes the number of continuous good frames sent by the mobile station in reverse, and judges whether a frame is a good frame according to a frame rate; and if the frame is the good frame, step 106 is performed; if the frame is the bad frame, step 107 is performed;
   herein, the base station side computes the number of continuous good frames sent by the mobile station in reverse, that is mainly judging whether the demodulated frame is a good frame according to the frame rate reported by the chip and computing the number of continuous good frames; specifically: the chip demodulates the received signal, and if the received signal energy is greater than a threshold value, the chip can correctly demodulate the signal, and the demodulated signal is a good frame, otherwise, it is a bad frame. The bad frame and the good frame respectively have their own frame rates to correspond to themself, therefore, the apparatus for setting the center of the search window judges whether the demodulated frame is a good frame according to the frame rate, and the apparatus for setting distinguishes the good and bad frames according to the frame rate reported by the chip; and if the frame rate reported by the chip is 9, it means that this frame is a bad frame. However, the methods for the chip identifying the bad frame prescribed by the systems from different manufacturers are different, so this application does not restrict the method.
Step 106, the base station side accumulates the number of continuous good frames, and adds 1 to the number of continuously good frames N received, and then step 108 is performed;
step 107, the base station side clears the number of continuously good frames received, and then step 108 is performed;
   when the chip reports a bad frame, the base station clears the number of continuously good frames received, that is, N=0;
step 108, the base station side judges whether the chip reports the location information of the mobile station EPN, if the chip reports the EPN, step 109 is performed; if the chip does not report the EPN, step 111 is performed;
   herein, the chip periodically reports the location information of the mobile station EPN, and when the chip reports the EPN, the base station side receives a notification message of the chip reporting the EPN, so as to acquire the EPN reported by the chip.
   It should be illustrated that, there is no strict order of computing the number of continuous good frames in step 105 and the chip regularly reporting the location information of the mobile station EPN in step 108 in this embodiment, they can be executed at the same time, and this embodiment does not restrict their order.
Step 109, the base station side judges whether the number of continuous good frames N is greater than or equal to a threshold value of continuous good frames M, if N≥M, step 110 is performed; and if N <M, step 111 is performed;
   when the chip reports the location information of the mobile station EPN, judge whether the number of continuous good frames N is greater than the threshold value of the number of continuous good frames M. Wherein, M is the threshold value of the number of continuous good frames, and the threshold value of the number of continuous good frames M is set in the apparatus for setting the center of the search window. The threshold value of the number of continuous good frames M is an optimal value acquired according to the results of multiple actual tests. M is a constant, usually taking the optimal threshold value as 3. If the number of continuous good frames is less than the threshold value of the number of continuous good frames, the center of the search window does not necessary to be reset.
   Herein, whether to change the center of the search window is decided according to the good or bad frame rate of the user's reverse link, which meets the requirement that the center of the search window of the voice service needs to change in real time, and moreover, whether to set the center of the search window is decided only according to the good or bad frame rate, which is relatively simple and feasible.
Step 110, according to the EPN reported by the chip, the center of the search window is set;
   when the chip reports the EPN, the apparatus for setting the center of the search window at the base station side sets the center of the search window of the chip according to the EPN and by calling a chip function. The chip function comprises a variety of functions compatible with the interfaces of the chips from different manufacturers.
Step 111, the base station side judges whether the current voice service is over, if the current voice service is not over, the flow returns to step 105; and if the current voice service is over, step 112 is performed;
   thus, until releasing the current call of the voice service.
Step 112, the current flow of setting the center of the search window ends.

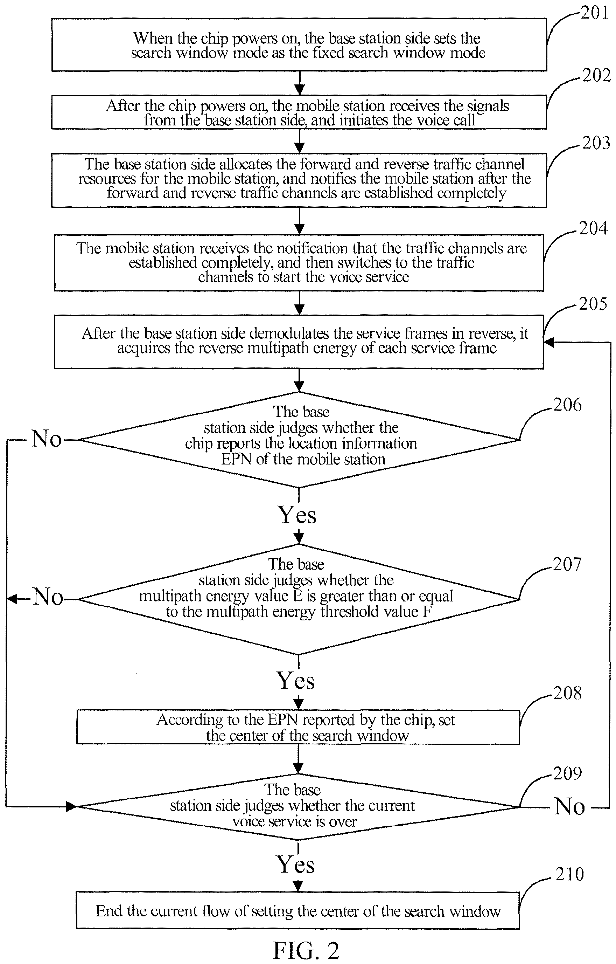

The above description is the flow of the implementation of the first embodiment of the method for setting the center of the search window in accordance with the present invention, and in the following, the method for setting the center of the search window in the present invention will be described in combination with another embodiment not according to the present invention. FIG. 2 shows a flow of an implementation of the second embodiment of a method for setting the center of a search window that is not in accordance with the present invention, and the main steps are as follows:
step 201, when the chip powers on, the base station side sets the search window mode as the fixed search window mode;
step 202, after the chip powers on, the mobile station receives signals from the base station side, and initiates a voice call;
step 203, the base station side allocates the forward and reverse traffic channel resources for the mobile station, and notifies the mobile station after establishing the forward and reverse traffic channels;
step 204, the mobile station receives the notification that the traffic channels are established completely, and then switches to the traffic channels to start the voice service;
step 205, after the base station side demodulates the service frames in reverse, it acquires the reverse multi-path energy of each service frame;
   wherein, the high-pass chip of the channel board at the base station side demodulates the service frames in reverse, calculates the reverse multi-path energy of each frame, and then reports the calculated reverse multi-path energy to the apparatus for setting the center of the search window in the base station side. The value of the reverse multi-path energy is recorded as E. Here, the reverse multi-path energy is the energy of one channel signal received by the base station; before the wireless signal reaches the destination side, it is refracted and reflected, etc., during spreading in the air to form multi-channel signals, and each of the multi-channel signals becomes one multi-path.
Step 206, the base station side judges whether the chip reports the location information of the mobile station EPN, if the chip reports the EPN, step 207 is performed; if the chip does not report the EPN, step 209 is performed;
step 207, the base station side judges whether the value of the reverse multi-path energy E is greater than or equal to a threshold value of the reverse multi-path energy F, if E≥F, step 208 is performed; if E<F, then step 209 is performed;
   wherein, the threshold value of the reverse multi-path energy F is an optimal value acquired according to the results of multiple tests, it is a configurable constant and can be acquired according to the actual tests.
Step 208, according to the EPN reported by the chip, the center of the search window is set;
   wherein, when the chip reports the EPN and the value of the reverse multi-path energy E ≥ F, the apparatus for setting the center of the search window at the base station side calls a chip functions to notify the chip to set the center of the search window according to the EPN.
Step 209, the base station side judges whether the current voice service is over, if the current voice service is not over, the flow returns to step 205; if the current voice service is over, step 210 is performed;
step 210, the current flow of setting this center of the search window ends.

For each of the aforementioned embodiments, in order to simplify the description, it is expressed as the combination of a series of actions, but those skilled in the art should understand that, the present invention is not restricted by the order of the described actions, since according to the present invention, some steps can adopt other orders or can be performed simultaneously.

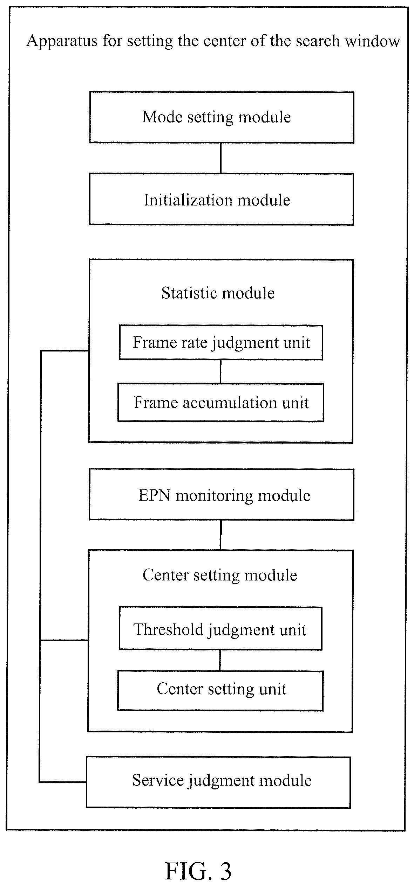

In order to achieve the aforementioned method, the present invention also provides an apparatus for setting the center of the search window, and as shown in FIG. 3, the apparatus mainly comprises: a mode setting module, an initialization module, an acquiring module, an EPN monitoring module, a center setting module and a service judgment module; in this embodiment, the acquiring module is a statistic module, wherein:
the mode setting module is used to set the search window mode;
the initialization module is used to initialize the number of continuous good frames on the reverse traffic channel;
the statistic module is used to compute the number of continuous good frames sent by the mobile station in reverse;
the EPN monitoring module is used to monitor the location information of the mobile station EPN reported by the chip;
the center setting module is used to, according to the number of continuous good frames acquired by the statistic module, judge whether to use the EPN reported by the chip and monitored by the EPN monitoring module to set the center of the search window, and set the center of the search window according to the EPN;
the service judgment module is used to judge whether the voice service is over, and notify the statistic module when the voice service is not over.

Here, the statistic module comprises: a frame rate judgment unit and a frame accumulation unit; wherein, the frame rate judgment unit is used to judge whether the frame rate is a bad frame; the frame accumulation unit is used to accumulat the number of continuous good frames according to the judgment result of the frame rate judgment unit.

Herein, the center setting module comprises: a threshold judgment unit and a center setting unit; wherein, the threshold judgment unit is used to judge whether the number of continuous good frames is greater than or equal to the threshold value of the number of continuous good frames, and if the number of continuous good frames is greater than or equal to the threshold value of the number of continuous good frames, notify the center setting unit; the center setting unit is used to set the center of the search window according to the EPN reported by the chip and monitored by the EPN monitoring module.

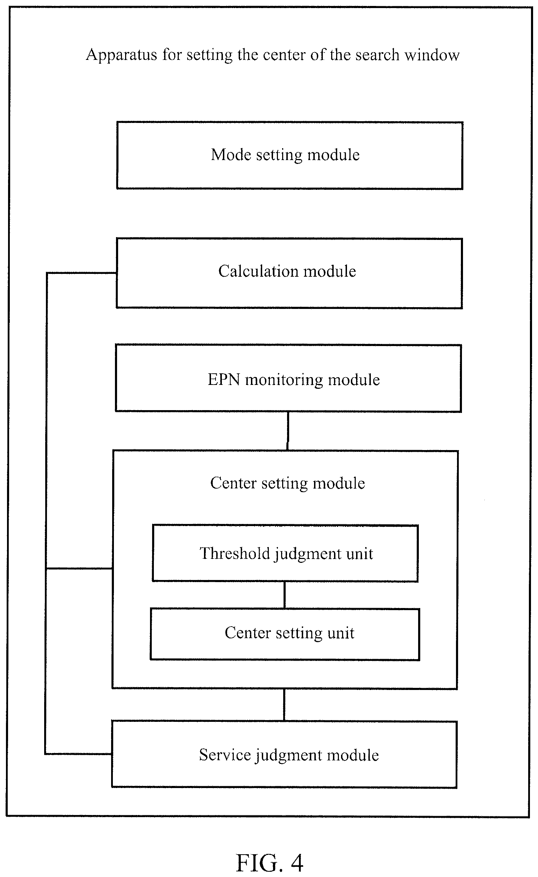

In addition, an apparatus not according to the present invention is for setting the center of the search window, and as shown in FIG. 4, the apparatus mainly comprises: a mode setting module, a calculation module, an EPN monitoring module, a center setting module, a service judgment module; in this embodiment, the acquiring module is a calculation module, wherein;
the mode setting module is used to set the search window mode;
the calculation module is used to calculate the reverse multi-path energy of each service frame;
the EPN monitoring module is used to monitor the location information of the mobile station EPN reported by the chip;
the center setting module is used to judge whether the EPN reported by the chip and monitored by the EPN monitoring module is used to set the center of the search window according to the reverse multi-path energy acquired by the calculation module;
the service judgment module is used to judge whether the voice service is over, and notify the calculation module when the voice service is not over.

Herein, the center setting module comprises: a threshold judgment unit and a center setting unit; wherein, the threshold judgment unit is used to judge whether the value of the reverse multi-path energy is greater than or equal to the threshold value of the reverse multi-path energy, and notify the center setting unit when the value of the reverse multi-path energy is greater than or equal to the threshold value of the reverse multi-path energy; the center setting unit is used to set the center of the search window according to the EPN reported by the chip and monitored by the EPN monitoring module.

In the aforementioned embodiments, the descriptions of each embodiment has different emphases, and some parts that are not described in detail in one embodiment can refer to the related description in the other embodiments. The above description is only the preferred embodiments of the present invention and only intended to illustrate and explain the present invention, and it is not intended to limit the scope of the present invention. The scope of protection is defined by the claims.

## Claims

1. A method for setting the center of a search window of an established reverse traffic channel, comprising:
setting a search window mode as a fixed search window mode, such that a channel board chip does not automatically adjust the center of the search window;
when a voice service starts, acquiring a center setting parameter, and when a chip reports a location information of a mobile station, setting the center of the search window according to the center setting parameter and the location information of the mobile station; and
before the voice service is over, continuing to acquire the center setting parameter, and resetting the center of the search window according to the subsequently acquired center setting parameter and the location information of the mobile station until the voice service is released;
wherein, the center setting parameter comprises the number of continuous good frames on the reverse traffic channel.

2. The method according to claim 1, wherein the method further comprises: after the chip powers on, initializing the number of continuous good frames on the reverse traffic channel.

3. The method according to claim 2, wherein, said acquiring the center setting parameter comprises:
judging whether a frame is a good frame according to a frame rate reported by the chip, if the frame is determined as a good frame, adding 1 to the number N of continuous good frames which are continuously received; and if the frame is determined as a bad frame, clearing the number of continuous good frames which are continuously received.

4. The method according to claim 2 or 3, wherein, said setting the center of the search window according to the acquired center setting parameter and the location information of the mobile station comprises:
judging whether the number of acquired continuous good frames is greater than or equal to a threshold value of the number of continuous good frames, if the number of continuous good frames is greater than or equal to the threshold value of the number of continuous good frames, setting the center of the search window according to the location information of the mobile station reported by the chip; and if the number of continuous good frames is less than the threshold value of the number of continuous good frames, not resetting the center of the search window.

5. The method according to claim 4, wherein, said resetting the center of the search window according to the subsequently acquired center setting parameter and the location information of the mobile station further comprises:
after setting the center of the search window every time, judging whether the current voice service is over, if the voice service is not over, returning to continuously compute the number of continuous good frames sent by the mobile station in reverse; and if the voice service is over, stopping setting the center of the search window at the time.

6. An apparatus for setting the center of a search window of an established reverse traffic channel, comprising: a mode setting module, an acquiring module, an EPN monitoring module and a center setting module; wherein,
the mode setting module is configured to set a search window mode as a fixed mode, such that a channel board chip does not automatically adjust the center of the search window;
the acquiring module is configured to acquire a center setting parameter, wherein, the center setting parameter comprises the number of continuous good frames on the reverse traffic channel; the EPN monitoring module is configured to monitor a location information of a mobile station (EPN) reported by a chip;
the center setting module is configured to set the center of the search window according to the center setting parameter and the location information of the mobile station.

7. The apparatus according to claim 6, wherein, the apparatus further comprises:
a service judgment module, configured to judge whether a voice service is over, and notify the acquiring module when the voice service is not over;
an initialization module, configured to initialize the number of continuous good frames on a reverse traffic channel;
wherein, the acquiring module is specifically configured to compute the number of continuous good frames sent by the mobile station in reverse, and the acquiring module further comprises: a frame rate judgment unit and a frame accumulation unit; wherein,
the frame rate judgment unit is configured to judge whether a frame is a bad frame according to a frame rate;
the frame accumulation unit is configured to accumulate the number of continuous good frames according to a judgment result of the frame rate judgment unit.

8. The apparatus according to claim 7, wherein, the center setting module further comprises: a threshold judgment unit and a center setting unit; wherein,
the threshold judgment unit is configured to judge whether the number of continuous good frames is greater than or equal to a threshold value of the number of continuous good frames, and notify the center setting unit when the number of continuous good frames is greater than or equal to the threshold value of the number of continuous good frames;
the center setting unit is configured to set the center of the search window according to the EPN reported by the chip and monitored by the EPN monitoring module.

## Patentansprüche

1. Verfahren zur Einstellung der Mitte eines Suchfensters eines eingerichteten Rückwärtsverkehrskanals, das aufweist:
Einstellen eines Suchfenstermodus als einen festen Suchfenstermodus, so dass ein Kanalkartenchip die Mitte des Suchfensters nicht automatisch anpasst;
wenn ein Sprachdienst startet, Erfassen eines Mitteneinstellparameters, und wenn ein Chip eine Standortinformation einer Mobilstation meldet, Einstellen der Mitte des Suchfensters gemäß dem Mitteneinstellparameter und der Standortinformation der Mobilstation; und
bevor der Sprachdienst vorbei ist, Fortsetzen der Erfassung des Mitteneinstellparameters und Rücksetzen der Mitte des Suchfensters gemäß dem anschließend erfassten Mitteneinstellparameter und der Standortinformation der Mobilstation, bis der Sprachdienst freigegeben wird;
wobei der Mitteneinstellparameter die Anzahl von fortlaufenden guten Frames auf dem Rückwärtsverkehrskanal aufweist.

2. Verfahren nach Anspruch 1, wobei das Verfahren ferner aufweist: nachdem der Chip eingeschaltet wird, Initialisieren der Anzahl fortlaufender guter Frames auf dem Rückwärtsverkehrskanal.

3. Verfahren nach Anspruch 2, wobei das Erfassen des Mitteneinstellparameters aufweist:
gemäß einer von dem Chip gemeldeten Frame-Rate Beurteilen, ob ein Frame ein guter Frame ist, wenn der Frame als ein guter Frame bestimmt wird, Addieren von 1 zu der Anzahl N fortlaufender guter Frames, die fortlaufend empfangen werden; und wenn der Frame als ein schlechter Frame bestimmt wird, Löschen der Anzahl fortlaufender guter Frames, die fortlaufend empfangen werden.

4. Verfahren nach Anspruch 2 oder 3, wobei das Einstellen der Mitte des Suchfensters gemäß dem erfassten Mitteneinstellparameter und der Standortinformation der Mobilstation aufweist:
Beurteilen, ob die Anzahl der erfassten fortlaufenden guten Frames größer oder gleich einem Schwellwert der Anzahl fortlaufender guter Frames ist, wenn die Anzahl fortlaufender guter Frames größer oder gleich dem Schwellwert der Anzahl fortlaufender guter Frames ist, Einstellen der Mitte des Suchfensters gemäß der von dem Chip gemeldeten Standortinformation der Mobilstation; und wenn die Anzahl fortlaufender guter Frames kleiner als der Schwellwert der Anzahl fortlaufender guter Frames ist, kein Zurücksetzen der Mitte des Suchfensters.

5. Verfahren nach Anspruch 4, wobei das Zurücksetzen der Mitte des Suchfensters gemäß dem anschließend erfassten Mitteneinstellparameter und der Standortinformation der Mobilstation ferner aufweist:
nach dem Einstellen der Mitte des Suchfensters jedes Mal Beurteilen, ob der aktuelle Sprachdienst vorbei ist, wenn der Sprachdienst nicht vorbei ist, Zurückkehren zu dem fortlaufenden Berechnen der Anzahl guter Frames, die von der Mobilstation zurückgesendet werden; und wenn der Sprachdienst vorbei ist, Stoppen der Einstellung der Mitte des Suchfensters zu der Zeit.

6. Vorrichtung zur Einstellung der Mitte eines Suchfensters eines eingerichteten Rückwärtsverkehrskanals, die aufweist:
ein Moduseinstellmodul, ein Erfassungsmodul, ein EPN-Überwachungsmodul und ein Mitteneinstellmodul; wobei
das Modeneinstellmodul konfiguriert ist, um einen Suchfenstermodus als einen festen Modus einzustellen, so dass ein Kanalkartenchip die Mitte des Suchfensters nicht automatisch anpasst;
das Erfassungsmodul konfiguriert ist, um einen Mitteneinstellparameter zu erfassen, wobei der Mitteneinstellparameter die Anzahl fortlaufender guter Frames auf dem Rückwärtsverkehrskanal aufweist;
das EPN-Modul konfiguriert ist, um eine Standortinformation einer Mobilstation (EPN), die von einem Chip gemeldet werden, zu überwachen;
das Mitteneinstellmodul konfiguriert ist, um eine Mitte des Suchfensters gemäß dem Mitteneinstellparameter und der Standortinformation der Mobilstation einzustellen.

7. Vorrichtung nach Anspruch 6, wobei die Vorrichtung ferner aufweist:
ein Dienstbeurteilungsmodul, das konfiguriert ist, um zu beurteilen, ob ein Sprachdienst vorbei ist und das Erfassungsmodul zu benachrichtigen, wenn der Sprachdienst nicht vorbei ist;
ein Initialisierungsmodul, das konfiguriert ist, um die Anzahl fortlaufender guter Frames auf einem Rückwärtsverkehrskanal zu initialisieren;
wobei das Erfassungsmodul spezifisch konfiguriert ist, um die Anzahl fortlaufender guter Rahmen, die von der Mobilstation rückwärts gesendet werden, zu berechnen, und das Erfassungsmodul ferner aufweist: eine Frame-Raten-Beurteilungseinheit und eine Frame-Ansammlungseinheit; wobei
die Frame-Raten-Beurteilungseinheit konfiguriert ist, um gemäß einer Frame-Rate zu beurteilen, ob ein Frame ein schlechter Frame ist;
die Frame-Ansammlungseinheit konfiguriert ist, um die Anzahl fortlaufender guter Frames gemäß einem Beurteilungsergebnis der Frame-Raten-Beurteilungseinheit anzusammeln.

8. Vorrichtung nach Anspruch 7, wobei das Mitteneinstellmodul ferner aufweist: eine Schwellwertbeurteilungseinheit und eine Mitteneinstelleinheit; wobei
die Schwellwertbeurteilungseinheit konfiguriert ist, um zu beurteilen, ob die Anzahl fortlaufender guter Frames größer oder gleich einem Schwellwert der Anzahl fortlaufender guter Frames ist, und die Mitteneinstelleinheit zu benachrichtigen, wenn die Anzahl fortlaufender guter Frames größer oder gleich dem Schwellwert der Anzahl fortlaufender guter Frames ist;
die Mitteneinstelleinheit konfiguriert ist, um die Mitte des Suchfensters gemäß der EPN einzustellen, die von dem Chip gemeldet und von dem EPN-Überwachungsmodul überwacht wird.

## Revendications

1. Procédé de définition du centre d'une fenêtre de recherche d'un canal de trafic inverse établi, comprenant les étapes consistant à :
définir un mode de fenêtre de recherche comme mode fixe de fenêtre de recherche, de manière qu'une puce de canal ne règle pas le centre de la fenêtre de recherche de façon automatique ;
dès le démarrage d'un service vocal, acquérir un paramètre de définition de centre, et lorsqu'une puce signale une information de localisation d'une station mobile, définir le centre de la fenêtre de recherche en fonction du paramètre de définition du centre et de l'information de localisation de la station mobile ; et avant la fin du service vocal, continuer à acquérir le paramètre de définition de centre, et redéfinir le centre de la fenêtre de recherche en fonction du paramètre de définition du centre acquis ensuite, et de l'information de localisation de la station mobile, jusqu'au dégagement du service vocal ;
dans lequel le paramètre de définition du centre comprend le nombre de bonnes trames consécutives sur le canal de trafic inverse.

2. Procédé selon la revendication 1, dans lequel le procédé comprend par ailleurs l'étape suivante : dès la mise sous tension de la puce, initialiser le nombre de bonnes trames consécutives sur le canal de trafic inverse.

3. Procédé selon la revendication 2, dans lequel ladite étape d'acquérir le paramètre de définition du centre comprend les étapes consistant à :
juger si une trame est une bonne trame selon un débit de trames signalée par la puce, et si la trame est déterminée comme étant une bonne trame, ajouter 1 au nombre N de bonnes trames consécutives reçues en continu; si la trame est déterminée comme étant une mauvaise trame, effacer le nombre de bonnes trames consécutives reçues en continu.

4. Procédé selon la revendication 2 ou 3, dans lequel ladite étape de définition du centre de la fenêtre de recherche en fonction du paramètre de définition du centre acquis et de l'information de localisation de la station mobile comprend l'étape consistant à :
juger si le nombre de bonnes trames consécutives acquises est supérieur ou égal à une valeur de seuil du nombre de bonnes trames consécutives, et si le nombre de bonnes trames consécutives est supérieur ou égal à la valeur de seuil du nombre de bonnes trames consécutives, définir le centre de la fenêtre de recherche en fonction de l'information de localisation de la station mobile signalée par la puce; si le nombre de bonnes trames consécutives est inférieur à la valeur de seuil du nombre de bonnes trames consécutives, ne pas redéfinir le centre de la fenêtre de recherche.

5. Procédé selon la revendication 4, dans lequel ladite étape de redéfinition du centre de la fenêtre de recherche en fonction du paramètre de définition du centre acquis et de l'information de localisation de la station mobile comprend l'étape consistant également à :
après avoir défini le centre de la fenêtre de recherche chaque fois, juger si le service vocal actuel est terminé ou si le service vocal n'est pas terminé, et revenir au calcul en continu du nombre de bonnes trames consécutives envoyées par la station mobile à l'envers ; et si le service vocal est terminé, arrêter la définition du centre de la fenêtre de recherche à ce moment.

6. Appareil pour la définition du centre d'une fenêtre de recherche d'un canal de trafic inverse établi, comprenant : un module de définition de mode, un module d'acquisition, un module de surveillance d'EPN et un module de définition de centre : dans lequel,
le module de définition de mode est conçu pour définir un mode de fenêtre de recherche comme mode fixe, de manière qu'une puce de canal ne règle pas le centre de la fenêtre de recherche de façon automatique ;
le module d'acquisition est conçu pour acquérir un paramètre de définition de centre, dans lequel le paramètre de définition de centre comprend le nombre de bonnes trames consécutives sur le canal de trafic inverse ; le module de surveillance d'EPN est conçu pour surveiller l'information de localisation d'une station mobile (EPN) signalée par une puce;
le module de définition de centre est conçu pour définir le centre de la fenêtre de recherche en fonction du paramètre de définition de centre et de l'information de localisation de la station mobile.

7. Appareil selon la revendication 6, dans lequel l'appareil comprend également : un module de jugement de service, conçu pour juger si le service vocal est terminé et pour communiquer au module d'acquisition quand le service vocal n'est pas terminé ;
un module d'initialisation, conçu pour initialiser le nombre de bonnes trames consécutives sur un canal de trafic inverse ;
dans lequel le module d'acquisition est spécialement conçu pour calculer le nombre de bonnes trames consécutives envoyées par la station mobile à l'envers, et le module d'acquisition comprend également : une unité de jugement de débit de trames et une unité d'accumulation de trames ; dans lequel
l'unité de jugement de débit de trames est conçue pour juger si une trame est une mauvaise trame en fonction d'un débit de trames ;
l'unité d'accumulation de trames est conçu pour accumuler le nombre de bonnes trames consécutives en fonction d'un jugement résultant de l'unité de jugement de débit de trames.

8. Appareil selon la revendication 7, dans lequel le module de définition de centre comprend également : une unité de jugement de seuil et une unité de définition de centre ; dans lequel
l'unité de jugement de seuil est conçue pour juger si le nombre de bonnes trames consécutives est supérieur ou égal à une valeur de seuil du nombre de bonnes trames consécutives, et communiquer à l'unité de définition de centre quand le nombre de bonnes trames consécutives est supérieur ou égal à la valeur de seuil du nombre de bonnes trames consécutives;
l'unité de définition de centre est conçue pour définir le centre de la fenêtre de recherche en fonction de l'EPN signalé par la puce et surveillé par le module de surveillance d'EPN.
